# EUROPEAN PATENT SPECIFICATION

(11) **EP 2 838 145 B1**
(45) Date of publication and mention of the grant of the patent: **08.05.2019**
(21) Application number: 13775979.1
(22) Date of filing: 15.03.2013
(51) Int. Cl.: H01M 4/66, C09D 101/28, C09D 103/08, C09D 105/00, C09D 105/02, H01G 11/28, H01G 11/68, H01M 4/13, H01M 4/139

(54) **METHOD FOR PRODUCING COLLECTOR FOR ELECTROCHEMICAL ELEMENTS, METHOD FOR PRODUCING ELECTRODE FOR ELECTROCHEMICAL ELEMENTS, COLLECTOR FOR ELECTROCHEMICAL ELEMENTS, ELECTROCHEMICAL ELEMENT, AND COATING LIQUID FOR FORMING COLLECTOR FOR ELECTROCHEMICAL ELEMENTS**
VERFAHREN ZUR HERSTELLUNG EINES KOLLEKTORS FÜR ELEKTROCHEMISCHE ELEMENTE, VERFAHREN ZUR HERSTELLUNG EINER ELEKTRODE FÜR ELEKTROCHEMISCHE ELEMENTE, KOLLEKTOR FÜR ELEKTROCHEMISCHE ELEMENTE, ELEKTROCHEMISCHES ELEMENT UND BESCHICHTUNGSFLUID ZUR FORMUNG DES KOLLEKTORS FÜR ELEKTROCHEMISCHE ELEMENTE
PROCÉDÉ DE PRODUCTION DE COLLECTEUR POUR ÉLÉMENTS ÉLECTROCHIMIQUES, PROCÉDÉ DE PRODUCTION D'ÉLECTRODE POUR ÉLÉMENTS ÉLECTROCHIMIQUES, COLLECTEUR POUR ÉLÉMENTS ÉLECTROCHIMIQUES, ÉLÉMENT ÉLECTROCHIMIQUE, ET LIQUIDE DE RECOUVREMENT POUR FORMATION DE COLLECTEUR POUR ÉLÉMENTS ÉLECTROCHIMIQUES

(30) Priority: 09.04.2012 JP 2012088655
(43) Date of publication of application: 18.02.2015
(73) Proprietor: Showa Denko K.K., Tokyo 105-8518 (JP); DAINICHISEIKA COLOR & CHEMICALS MFG. CO., LTD., Chuo-ku Tokyo 103-8383 (JP)
(72) Inventor: ARAI Yoshikazu, Tokyo 105-8518 (JP); KOBAYASHI Nobuyuki, Tokyo 103-8383 (JP); DOI Seiji, Tokyo 103-8383 (JP); YOKOUCHI Hitoshi, Tokyo 105-8518 (JP); OHMORI Masahiro, Tokyo 105-8518 (JP)
(74) Representative: Strehl Schübel-Hopf & Partner
(86) International application number: PCT/JP2013/057478
(87) International publication number: WO 2013/153916

(56) References cited:
- EP-A1- 2 665 117
- WO-A1-2011/024797
- JP-A- H0 997 625
- JP-A- 2000 311 681
- JP-A- 2004 087 227
- JP-A- 2004 214 182
- JP-A- 2009 277 660

## Description

### TECHNICAL FIELD

The present invention relates to a method of producing a current collector for an electrochemical element, a method of producing an electrode for an electrochemical element,
and the use of a coating liquid for fabricating a current collector for an electrochemical element.

### BACKGROUND ART

Lithium secondary batteries are an example of an electrochemical element that is currently used in applications such as cell phones, laptop personal computers and video cameras because of their high energy density. Compact lithium ion batteries typically use lithium cobalt oxide or lithium manganese oxide for the positive electrode active material and graphite for the negative electrode.

The electrodes of typical lithium secondary batteries are composed by immobilizing a positive electrode active material in the form of lithium cobalt oxide or lithium manganese oxide and electron-conducting carbon particles on a metal foil having a current collecting effect. Aluminum is typically used for the material of the metal foil. In addition, polyvinylidene fluoride (PVDF) or polytetrafluoroethylene (PTFE) and the like are used for the binder used to immobilize the positive electrode active material and carbon particles.

In addition, the negative electrode is composed by immobilizing a negative electrode active material on a metal foil having a current collecting effect. Copper is typically used for the material of the metal foil. In addition, polyvinylidene fluoride (PVDF) is used for the binder used to immobilize the negative electrode active material.

In recent years, a growing number of attempts have been made to apply these high-performance secondary batteries to the motive power supplies of automobiles and the like. Consequently, problems are being encountered that were not expected in the case of conventional compact batteries.

One of these is the problem of rapid charge/discharge characteristics.

In order to rapidly charge and discharge electrochemical elements, it is necessary to increase the charge/discharge current. However, when conventional electrochemical elements were charged and discharged at high current, there was the problem of the occurrence of the shortcoming of an extremely large decrease in capacity during repeated charging and discharging due to internal resistance of the battery (battery capacity retention rate). Numerous attempts have been made to improve on this problem (see, for example, Patent Documents 1 to 3 and Non-Patent Document 1).

In addition, in the positive electrode of a lithium secondary battery, for example, since electrode active materials currently in common use have low electrical conductivity, electrode mixtures have been prepared by adding electrically conductive particles such as carbon materials. However, from the viewpoint of improving energy density of the battery, it is necessary to reduce the amount of electrically conductive particles added as much as possible. Therefore, attempts have been made to reduce battery internal resistance while only adding a small amount of electrically conductive particles (see, for example, Patent Documents 4 and 5).

### [Prior Art Documents]

### [Patent Documents]

[Patent Document 1] Japanese Unexamined Patent Application, First Publication No. 2001-266850
[Patent Document 2] Japanese Examined Patent Application, Second Publication No. H7-123053
[Patent Document 3] Japanese Examined Patent Application, Second Publication No. H4-24831
[Patent Document 4] Japanese Unexamined Patent Application, First Publication No. H7-130356
[Patent Document 5] Japanese Unexamined Patent Application, First Publication No. 2005-222772

### [Non-Patent Documents]

[Non-Patent Document 1] The 45th Symposium on Batteries (2004), 3C18 WO 2011/024797 A1 discloses an electricity storage device produced by using a water-based slurry composition comprising a polysaccharide-based polymer, a water-based medium and a uniformly-dispersed hydrophobic filler.

### DISCLOSURE OF THE INVENTION

### [Problems to be Solved by the Invention]

However, the technologies described in each of the aforementioned documents were inadequate for improving on the aforementioned problems.

With the foregoing in view, an object of the present invention is to provide a method of producing a current collector for an electrochemical element and a method of producing an electrode for an electrochemical element
that enable rapid charging and discharging with low internal resistance.

In addition, an object of the present invention is to provide the use of a coating liquid for fabricating a current collector for an electrochemical element that enables rapid charging and discharging with low internal resistance.

Since low internal resistance has the potential for being required not only by current collectors for lithium secondary batteries, but also by current collectors for electrochemical elements, the method of producing a current collector of the present invention is not limited to a method of producing a current collector for a lithium secondary battery, but can also be used as a method of producing a current collector for an electrochemical element.

This applies similarly to a positive electrode for an electrochemical element, a negative electrode for an electrochemical element and an electrochemical element.

### [Means for Solving the Problems]

The present invention employs the following configurations in order to solve the aforementioned problems.
[1] A method of producing a current collector for an electrochemical element, comprising:
   a step for coating a coating liquid onto a metal foil,
   the coating liquid comprising:
      a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
      an organic acid having valence of two or more,
      carbon particles, and
      a dispersion medium consisting of an organic solvent, wherein the organic solvent comprises a protic and an aprotic organic solvent; and
      a step for removing the organic solvent and forming a coating layer on the metal foil,
      wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof.
[2] The method of producing a current collector for an electrochemical element according to [1], wherein the carbon particles are at least one selected from the group consisting of carbon black, graphite, vapor grown carbon fibers, carbon nanotubes, carbon nanofibers and graphene.
[3] A method of producing an electrode for an electrochemical element, comprising:
   a step for coating a coating liquid onto a metal foil,
   the coating liquid comprising:
      a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
      an organic acid having valence of two or more,
      carbon particles, and
      a dispersion medium consisting of an organic solvent, wherein the organic solvent comprises a protic and an aprotic organic solvent;
      a step for removing the organic solvent and forming a coating layer on the metal foil; and,
      a step for forming a film containing an electrode active material on the coating layer,
      wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof.
[4] The method according to any one of [1] to [3], wherein the aprotic polar organic solvent has a boiling point at normal pressure of 50-300°C, and the protic polar organic solvent has a boiling point at normal pressure of 100°C or less.
[5] Use of a coating liquid for fabricating a current collector for an electrochemical element, the coating liquid comprising:
   a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
   an organic acid having valence of two or more,
   carbon particles, and
   a dispersion medium consisting of an organic solvent, wherein the organic solvent comprises a protic and an aprotic organic solvent, and
   wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof.
[6] The use of [5], wherein the aprotic polar organic solvent has a boiling point at normal pressure of 50-300°C, and the protic polar organic solvent has a boiling point at normal pressure of 100°C or less.

### [Effects of the Invention]

According to the present invention, a method of producing a current collector for an electrochemical element, a method for producing an electrode for an electrochemical element, a current collector for an electrochemical element and an electrochemical element can be provided that enable rapid charging and discharging with low internal resistance.

In addition, the present invention is able to provide a coating liquid for fabricating a current collector for an electrochemical element that enables rapid charging and discharging with low internal resistance.

### BEST MODE FOR CARRYING OUT THE INVENTION

The following provides a detailed explanation of the method for producing a current collector for an electrochemical element, a method for producing an electrode for an electrochemical element, a current collector for an electrochemical element, an electrochemical element, and a coating liquid for fabricating a current collector for an electrochemical element to which the present invention is applied. Furthermore, materials, dimensions and so forth indicated in the following explanation are merely exemplary, the present invention is not limited thereto, and they can be suitably modified within a range that does not impair the effects of the present invention. In addition, in the present description, aluminum refers to aluminum and aluminum alloy. In addition, copper refers to pure copper and copper alloy.

Examples of an electrochemical element in the present invention include a lithium secondary battery and an electric double-layer capacitor.

### [Method of Producing Current Collector for Electrochemical Element]

The method of producing a current collector for an electrochemical element of the present invention comprises a step for coating a coating liquid onto a metal foil, the coating liquid comprising at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more,
carbon particles and an organic solvent, followed by removing the organic solvent and forming a coating layer on the metal foil.

### <Current Collector>

The current collector produced according to the method of producing a current collector for an electrochemical element of the present invention is composed of a metal foil and a coating layer formed on the surface of the metal foil.

### (Metal Foil)

Although the metal foil used in the method of producing a current collector for an electrochemical element in the present invention is typically aluminum foil or copper foil, it is not limited thereto. For example, a conventionally known material such as nickel, titanium or alloys thereof, stainless steel or platinum can also be used.

There are no particular limitations on the aluminum foil able to be used in the present invention, and various types of aluminum foil can be used, such as aluminum A1085 material and aluminum A3003 material of pure aluminum systems. In addition, the thickness thereof is generally preferably 5 µm to 100 µm. In addition, this applies similarly to copper foil, with rolled copper foil and electrolytic copper foil being used preferably.

In the case the electrochemical element of the present invention is a lithium secondary battery, and particularly a lithium ion secondary battery, aluminum foil is typically used on the positive electrode side while copper foil is typically used on the negative electrode side, although not limited thereto.

### (Coating Layer)

The coating layer contains a binder and carbon particles. In addition, the coating layer may be formed on one side or on both sides of the metal foil.

### (Binder)

At least one type of substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum (to generically be referred to as a polysaccharide that is soluble in organic solvent and contains glucose and/or galactose as constituent saccharides) is used as a binder in the present invention.

Hydroxyethyl cellulose, hydroxypropyl cellulose, hydroxyethyl starch, hydroxypropyl starch and hydroxypropyl guar gum are more preferable from the viewpoints of crosslinking sites and solubility in organic solvent.

In addition, a compound other than the polysaccharide that is soluble in organic solvent and contains glucose and/or galactose as constituent saccharides thereof may also be contained in the binder, and examples of such compounds include ion-permeable compounds and crosslinking agents other than the polysaccharide that is soluble in organic solvent and contains glucose and/or galactose as constituent saccharides thereof.

The ion-permeable compound is only required to be a compound that has ion permeability, and examples thereof include, but are not limited to, polysaccharide polymer compounds in the form of polymers of chitin, chitosan, agarose, amylose, amylopectin, alginic acid, inulin, carrageenan, glycogen, glucomannan, keratan sulfate, colominic acid, chondroitin sulfate, cellulose, starch, hyaluronic acid, pectin, pectic acid, heparan sulfate, levan, graminan, lenthinan, curdlan and derivatives thereof, polyvinyl alcohol, (meth) acrylic acid and derivatives thereof.

Chitin, chitosan and derivatives thereof are more preferable from the viewpoint of adhesion to metal foil.

An organic acid having a valence of two or more is used as a crosslinking agent. Specific examples of organic acids having a valence of two or more include divalent aromatic carboxylic acids such as phthalic acid, isophthalic acid and terephthalic acid; aromatic carboxylic acids having a valence of three or more such as trimellitic acid, pyromellitic acid, biphenyl tetracarboxylic acid and benzophenone tetracarboxylic acid; divalent linear aliphatic carboxylic acids such as succinic acid, maleic acid, tartaric acid, malic acid, glutaric acid, itaconic acid and adipic acid; linear aliphatic carboxylic acids having a valence of three or more such as citric acid and 1,2,3,4-butane tetracarboxylic acid; organic acids and anhydrides thereof such as 2-phosphonobutane-1,2,4-tricarboxylic acid. crosslinking agent can be used that acts as a crosslinking agent as a result of reacting with a polysaccharide that is soluble in organic solvent and contains glucose and/or galactose as constituent saccharides thereof with an ion-permeable compound other than that polysaccharide, and enables carbon particles to be arranged more strongly on the metal foil.

Trimellitic acid or pyromellitic acid are more preferable from the viewpoints of crosslinking sites and resistance to deterioration with time.

The amount of binder in the coating layer is preferably 10 parts by weight to 300 parts by weight, more preferably 10 parts by weight to 200 parts by weight, and even more preferably 15 parts by weight to 100 parts by weight, based on 100 parts by weight of the carbon particles.

### (Carbon Particles)

Carbon black, graphite, vapor grown carbon fibers, carbon nanotubes, carbon nanofibers or graphene is preferably used for the carbon particles used in the coating layer.

Examples of carbon black include acetylene black and furnace black. In addition, commercially available products such as Ketjen black can also be used. One type of these carbon particles can be used or two or more types can be used in combination. Acetylene black is more preferable from the viewpoints of orientation, price and the like.

The carbon particles may be spherical, squamous, block or irregularly shaped particles, or may be anisotropically shaped particles such as acicular, rod-shaped or fibrous particles.

The average primary particle diameter of carbon particles such as spherical, squamous, block or irregularly shaped particles is preferably 10 nm to 5 µm and more preferably 10 nm to 100 nm. These values for average primary particle diameter of the carbon particles are obtained by measuring the particle diameters of 500 to 1000 particles using an electron microscope, and calculating the numerical average thereof. Furthermore, in the case of non-spherical particles, average particle diameter is determined by taking the maximum diameter (longest diameter) to be the particle diameter followed by similarly calculating the numerical average thereof.

Since anisotropically shaped carbon particles have a large surface area per weight and have a large contact area with the metal foil or electrode active material and the like, electrical conductivity between the metal foil and the electrode active material or between two electrode active materials can be enhanced by adding only a small amount of these carbon particles . Examples of particularly effective anisotropically shaped carbon particles include vapor phase grown carbon fibers, carbon nanotubes and carbon nanofibers. The average fiber diameter of vapor grown carbon fibers, carbon nanotubes or carbon nanofibers from the viewpoint of improvement of electrical conductivity is normally 0.001 µm to 0.5 µm and preferably 0.003 µm to 0.2 µm, while the average fiber length is normally 1 µm to 100 µm and preferably 1 µm to 30 µm. Furthermore, average fiber diameter and average fiber length are determined by measuring the fiber diameters and fiber lengths of 500 to 1000 fibers using an electron microscope, and calculating the numerical average thereof.

The powder resistance value of the carbon particles as measured in compliance with JIS K1469 is preferably 5.0 × 10⁻¹ Ω·cm or less.

The carbon particles are contained in the coating layer preferably at 20% by weight to 90% by weight, more preferably at 25% by weight to 85% by weight, and even more preferably at 30% by weight to 80% by weight. As a result, a current collector can be obtained that is provided with a coating layer that demonstrates superior adhesion to a metal foil or electrode mixture.

The coating layer may be partially provided on the surface of the metal foil or may be provided uniformly over the entire surface. Examples of forms in which the coating layer is partially provided on the surface of the metal foil include a form in which the coating layer is provided in the center of the metal foil excluding the edge portions thereof, or a form in which the coating layer is provided in a pattern such as in the form of a dot, striped, mesh, lattice (grid), nested or spiral pattern. A ratio A1 of the area of the coating layer to the area of the metal foil is preferably 50% to 100%, more preferably 60% to 100% and even more preferably 70% to 100%.

The method used to determine the ratio A1 of the area of the coating layer to the area of the metal foil is as indicated below.

The pattern of the coating layer on the current collector is observed at low magnification from the normal direction through a microscope and the like, and images of the observed pattern are photographed in three or more fields. The photographs are then binarized by subjecting to image analytical processing, and the area Sa of those portions where the coating layer is visible and the area Sb of those portions where the coating layer is not visible are determined. The ratio A1 of the area of the coating layer to the area of the metal foil is then calculated using the formula: A1 = (Sa)/(Sa+Sb) × 100.

In addition, in the case the coating layer is provided in a simple and large pattern, the area ratio A1 of the coating layer may also be calculated by measuring the length thereof using a caliper and the like. Furthermore, the area of the metal foil referred to here is the area of both sides when the coating layer is provided on both sides of the metal foil, or the area of one side when the metal foil is provided on one side.

The amount of the coating layer provided on the metal foil is preferably 0.2 g/m² to 5 g/m², more preferably 0.5 g/m² to 3 g/m² and most preferably 1 g/m² to 2 g/m². If provided in such an amount, the feedthrough resistance value of the current collector decreases considerably, and as a result of using this current collector, a lithium secondary battery or other electrochemical element can be composed that has low internal resistance and impedance.

The thickness of the coating layer is 5 µm or less, preferably 4 µm or less and even more preferably 3 µm or less. Although there are no particular limitations on the lower limit of the thickness of the coating layer provided it is within a range that allows the function of the coating layer to be demonstrated, it is preferably 0.1 µm. If the thickness of the coating layer is made to be within the aforementioned ranges, the feedthrough resistance value of the coating layer decreases, and the internal resistance and impedance of a lithium secondary battery or other electrochemical element can also be decreased.

### (Area Ratio of Carbon Particles)

The area ratio of the carbon particles on the coating layer is preferably 50% to less than 100%, more preferably 60% to less than 100% and even more preferably 70% to less than 100%. This area ratio is the ratio of the area of the carbon particles to the area of the coating layer. As a result of making this area ratio to be within the aforementioned ranges, the feedthrough resistance value of the current collector decreases, and the internal resistance and impedance of a lithium secondary battery obtained using this current collector can also be decreased.

Furthermore, the area ratio of the carbon particles is calculated in the manner indicated below.

First, the portion of the current collector where the coating layer is provided is observed at high magnification from the normal direction through a microscope and the like, and observed images are photographed in three or more fields. Magnification is adjusted so that preferably 100 or more, more preferably 200 or more and even more preferably 300 or more carbon particles are visible in a single field. Furthermore, the light level is adjusted so that the boundaries of the particles are clearly defined and there is no occurrence of halation. Caution is especially required in the case of using a material such as aluminum foil for the metal foil that easily reflects light. The photographs are then binarized by subjecting to image analytical processing, and the area S1 of those portions where electrically conductive particles are visible and the area S0 of those portions where they are not visible are determined. A ratio A2 of the area of the carbon particles to the area of the coating layer is then calculated with the formula: A2 = (S1)/(S1+S0) × 100. This ratio A2 is the area ratio of the carbon particles. During binarization processing, the photographed images were digitized at a contrast level of 0 to 255, a value of 110, for example, was defined as a threshold value, and a value of 0 to 109 was evaluated as "black" while a value of 110 to 255 was evaluated as "white". Since carbon particles frequently appear black in photographed images, the area of the black portions is the area of the carbon particles.

As will be subsequently described, the area ratio can be controlled by changing the amount of dispersion medium (organic solvent) used when forming the coating layer, the method used to prepare the coating liquid or the method used to apply the coating liquid and the like.

### (Organic Solvent)

In the method of producing a current collector for an electrochemical element, although there are no particular limitations on the organic solvent contained in the coating liquid provided it is able to disperse the carbon particles, binder (at least one substance selected from the group consisting of methyl cellulose and the like) and an organic acid having a valence of two or more, the organic solvent comprises an aprotic polar solvent and a protic polar solvent.

Examples of aprotic polar solvents include ethers, carbonates, amides and esters. Among these, amides and esters are preferable.

The aprotic polar solvent preferably is that which evaporates at a temperature equal to or below the temperature of heat treatment following coating. More specifically, the boiling point thereof at normal pressure is preferably 50°C to 300°C and more preferably 100°C to 220°C. The use of an aprotic polar solvent having such a boiling point hardly changes in concentration of the coating liquid for coating layer (coating liquid) during coating work, thereby facilitating the obtaining of a coating layer having a prescribed thickness or coated amount. In addition, the dispersion medium (organic solvent) can be adequately removed by heat treatment. Examples of aprotic polar solvents having the boiling point as described above include N,N-dimethylacetoamide, N-methyl-2-pyrrolidone, N-ethylpyrrolidone and γ-butyrolactone. Among these, N-methyl-2-pyrrolidone is preferable.

On the other hand, examples of protic polar solvents include alcohols and polyvalent alcohols.

If a protic polar solvent is contained in the coating liquid for coating layer, wettability of the coating liquid for coating layer with respect to the current collector improves and the area ratio of electrically conductive particles can be made to be uniform within the aforementioned range. The protic polar solvent is preferably that which evaporates at a temperature equal to or below the temperature of heat treatment following coating. More specifically, the boiling point of the protic polar solvent at normal pressure is preferably 100°C or lower. A preferable example of a protic polar solvent is an alcohol. More preferable examples of protic polar solvents include ethanol, isopropyl alcohol and n-propyl alcohol.

The amount of dispersion medium in the coating liquid for coating layer is preferably 20% by weight to 99% by weight, more preferably 65% by weight to 98% by weight, and even more preferably 80% by weight to 95% by weight. Although there are no particular limitations on the amount of protic polar solvent, it is preferably 1% by weight to 20% by weight based on the total weight of the dispersion medium. As a result of the composition of the dispersion medium having values such as these, the coating liquid has a suitable viscosity, thereby enabling superior coating workability, ease of adjustment of the coated amount, thickness of the coating layer and area of the carbon particles being within the aforementioned ranges, and a uniformly coated surface. Furthermore, the area ratio of the carbon particles and thickness of the coating layer decrease when the amount of dispersion medium is increased, while the area ratio of the carbon particles and thickness of the coating layer increase when the amount of dispersion medium is decreased.

The viscosity of the coating liquid for coating layer at normal temperature is preferably 100 mPa·s to 50,000 mPa·s, more preferably 100 mPa·s to 10,000 mPa·s and even more preferably 100 mPa·s to 5, 000 mPa·s. Viscosity is measured using a B type viscometer and selecting a rotor and rotating speed suitable for the measured viscosity range. In the case of measuring the viscosity of a coating liquid having a viscosity of, for example, several hundred mPa·s, viscosity is measured using a No. 2 rotor at a rotating speed of 60 rpm.

In addition to the aforementioned carbon particles and binder, the coating liquid for coating layer used in the present invention may also contain additives such as a dispersant, thickener, anti-settling agent, anti-skinning agent, anti-foaming agent, electrostatic coating property improver, anti-running agent, leveling agent, cissing inhibitor or crosslinking catalyst. Known additives can be used for all of these additives, and the amount added thereof is preferably 10 parts by weight or less based on 100 parts by weight of the total weight of the carbon particles and binder.

The coating liquid can be produced by mixing (kneading) the carbon particles, binder, dispersion medium and additives added as necessary using a mixer (kneader) . Although there are no particular limitations on the order in which each component contained in the coating liquid is mixed, from the viewpoint of facilitating the obtaining of a uniform coating liquid, a liquid obtained by mixing the binder and dispersion medium is preferably first prepared followed by adding the carbon particles thereto and mixing therein.

There are no particular limitations on the kneader used during kneading, and examples thereof include a planetary mixer, degassing kneader, ball mill, paint shaker, vibration mill and Loedige mixer.

There are no particular limitations on the method used to coat the coating liquid for coating layer on the metal foil. Examples thereof include casting, bar coating, dipping and printing.

Examples of techniques used to adjust area ratio include designing the pattern of coating roll of a gravure coater and using a mask of the stencil type or wire mesh type.

Heat treatment is carried out to remove the dispersion medium. Although there are no particular limitations on the method used to carry out heat treatment, it is preferably carried out by a method that uses hot air. The temperature of heat treatment is preferably 100°C to 300°C and more preferably 120°C to 250°C. Heating time is preferably 10 seconds to 10 minutes. In addition, the coating layer may be pressed with a roller or flat plate during heat treatment.

### [Coating Liquid for Fabricating Current Collector for Electrochemical Element]

The coating liquid for fabricating a current collector for an electrochemical element in the present invention contains at least one type of substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more, carbon particles and an organic solvent.

Each constituent of the coating liquid is the same as those used in the in the method for producing a current collector for an electrochemical element in the present invention.

### [Method for Producing Electrode for Electrochemical Element]

The method for producing an electrode for an electrochemical element in the present invention has a step for coating a coating liquid on a metal foil, the coating liquid comprising at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more,
carbon particles and an organic solvent, followed by removing the organic solvent and forming a coating layer on the metal foil; and, a step for forming a film containing an electrode active material on the coating layer. Although the electrode may be a positive electrode or negative electrode of an electrochemical element, it is preferably a positive electrode.

Furthermore, the step for forming the coating layer on the metal foil is the same as in the method of producing a current collector for an electrochemical element in the present invention.

The step for forming a film containing an electrode active material on the coating layer comprises applying a coating liquid for an electrode mixture containing an electrode material and dispersion medium on the coating layer followed by removing the dispersion medium to form an electrode mixture. A binder and a conductive assistant, as necessary, are added to the coating liquid for an electrode mixture. In addition, a known solvent can be used as another solvent provided it does not cause degeneration of the previously formed coating layer.

### (Electrode Mixture)

The electrode mixture is composed by being provided with an electrode material composed of an electrode active material. A binder is contained in the electrode mixture in addition to the electrode material. In addition, a conductive assistant may also be contained in the electrode mixture.

### (Electrode Material)

A known electrode active material can be used for the electrode active material that composes the electrode material, and in the case the electrode is a positive electrode of a lithium secondary battery, for example, one or more types of a lithium-containing compound oxide, chalcogen compound or lithium-containing olivine acid salt is preferable. More specifically, the electrode active material preferably contains one or more types of any of lithium cobalt oxide, lithium manganese oxide, lithium nickel oxide, lithium nickel manganese cobalt oxide, titanium sulfide (TiS₂), olivine acid iron lithium or olivine acid manganese lithium.

In addition, in the case the electrode is a negative electrode of a lithium secondary battery, examples of electrode active materials that can be used include carbon materials such as synthetic graphite or natural graphite, metals such as Sn and semiconductor materials such as Si. In addition, lithium compound oxides such as lithium titanate or metal oxides such as titanium oxide may also be used.

A carbon material may be adhered to the surface of the electrode active material in the case of using olivine acid iron lithium or olivine acid manganese lithium for the electrode active material of the positive electrode and in the case of using a metal such as Sn or semiconductor material such as Si for the electrode active material of the negative electrode.

The particle diameter of the electrode active material in terms of the volume-based 50% cumulative particle diameter D₅₀ is preferably 0.01 µm to 50 µm. If D₅₀ is 50 µm or less, the occlusion and release of lithium inside and outside the particles is uniform, thereby making this preferable. In addition, if D₅₀ is 0.01 µm or more, there is no disturbance of particle structure and no occurrence of decreases in performance, thereby making this preferable.

In the case of using an electrode active material of which itself the specific resistance is high, an electrode active material having a small particle diameter within the aforementioned range of particle diameter is used preferably. For example, in the case of using olivine acid iron lithium or olivine acid manganese lithium, the average particle diameter D₅₀ is within the range of 0.01 µm to 0.5 µm.

An example of an electrochemical element other than a lithium secondary battery is an electric double-layer capacitor . In the case the electrode is an electrode of an electric double-layer capacitor, an example of an electrode active material is activated carbon, the BET specific surface area thereof is preferably 800 m²/g to 2500 m²/g, and the 50% cumulative particle diameter (µm) (median diameter) as measured with a Microtrac particle size distribution analyzer is preferably 1 µm to 50 µm.

Examples of binders of the electrode mixture include polyethylene, polypropylene, ethylene-propylene copolymer, ethylene-propylene terpolymer, butadiene rubber, styrene-butadiene rubber, butyl rubber, polytetrafluoroethylene, poly(meth)acrylate, polyvinylidene fluoride, polyethylene oxide, polypropylene oxide, polyepichlorohydrin, polyphosphazene and polyacrylonitrile. The added amount of binder is preferably 0.1% by weight to 10% by weight based on the dry weight of the electrode mixture.

In addition, although there is no particular need to add a conductive assistant provided electrical conductivity of the electrode material per se is adequately secured, it may be added to improve electrode performance. However, if added in excess, since the blending ratio of the electrode material in the electrode mixture undergoes a relative decrease resulting in a decrease in charge/discharge capacity, whether or not a conductive assistant is added is determined after carefully considering the properties of the electrode.

Examples of conductive assistants include electrically conductive metal powders such as silver powder, and electrically conductive carbon powders such as furnace black, Ketjen black or acetylene black. The added amount of the conductive assistant in the case of addition thereof is 5% by weight or less and preferably 2% by weight or less based on the dry weight of the positive electrode mixture, and may also not be added provided electrical conductivity of the positive electrode mixture is adequately secured.

Moreover, an ion-conducting compound, thickener, dispersant or lubricant and the like may also be contained as necessary in the electrode mixture. Examples of ion-conducting compounds include polysaccharides such as chitin or chitosan and crosslinked products of those polysaccharides. Examples of thickeners include carboxymethyl cellulose and polyvinyl alcohol.

The amount of electrode mixture formed on the metal foil is preferably 20 g/m² to 400 g/m², more preferably 30 g/m² to 300 g/m² and most preferably 50 g/m² to 200 g/m². If the amount formed is within these ranges, charge/discharge capacity in the electrode is adequate and separation of the electrode mixture can be inhibited.

Following formation of the electrode mixture, the positive electrode mixture is preferably pressed with a roller or flat plate. This pressing makes it possible to enhance adhesion between the metal foil and positive electrode mixture. The pressure applied during pressing is preferably about 98 MPa (1 t/cm²) to 294 MPa (3 t/cm²).

### [Current Collector for Electrochemical Element]

The current collector for an electrochemical element manufactured using the method of the present invention has a coating layer formed on a metal foil by coating a coating liquid onto the metal foil, the coating liquid comprising at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more,
carbon particles and an organic solvent, followed by removing the organic solvent.

Furthermore, the previously described carbon particles, organic solvent and metal foil are used for the carbon particles, organic solvent and metal foil.

### [Electrochemical Element]

The electrochemical element is an electrochemical element having a pair of electrodes at least one of which comprises a metal foil, a coating layer formed on the metal foil and a film containing an electrode active material formed on the coating layer; wherein, the coating layer is formed by coating a coating liquid onto the metal foil, the coating liquid comprising at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more ,
carbon particles and an organic solvent, followed by removing the organic solvent.

Furthermore, the previously described carbon particles, organic solvent, metal foil and electrode active material are used for the carbon particles, organic solvent, metal foil and electrode active material.

The electrochemical element can be produced by a production method that includes a step for forming a coating layer on a metal foil by coating a coating liquid on the metal foil, the coating liquid comprising at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum; an organic acid having valence of two or more, carbon particles and an organic solvent, followed by removing the organic solvent, a step for forming a film containing an electrode active material on the coating layer to obtain at least one of a positive electrode and negative electrode, and a step for layering a positive electrode, a separator and a negative electrode in this order and impregnating them with an organic electrolytic solution.

Furthermore, the step for forming the coating layer on the metal foil and the step for forming a film containing an electrode active material on the coating layer to obtain an electrode are the same as in the method of producing an electrode for an electrochemical element in the present invention.

In the case of producing a lithium secondary battery, the lithium secondary battery is normally produced by sealing a positive electrode, negative electrode, separator and nonaqueous electrolyte in an outer casing.

In this case, the production method according to the present invention can be used for either the positive electrode or negative electrode, or the production method according to the present invention can be used for both the positive electrode and negative electrode. As a result, a lithium secondary battery is obtained that allows rapid charging and discharging and is able to maintain a high battery capacity retention rate even under conditions of a large charge/discharge current. Since explanations have already been provided for the positive electrode and negative electrode, the following provides an explanation of the nonaqueous electrolyte and separator that compose a lithium secondary battery.

### (Nonaqueous Electrolyte)

Examples of the nonaqueous electrolyte include nonaqueous electrolytes obtained by dissolving a lithium salt in an aprotic solvent.

The aprotic solvent is preferably at least one type of solvent selected from the group consisting of ethylene carbonate, diethyl carbonate, dimethyl carbonate, methyl ethyl carbonate, propylene carbonate, butylene carbonate, γ-butyrolactone and vinylene carbonate, or a mixed solvent of two or more types thereof.

In addition, examples of the lithium salt include LiClO₄, LiPF₆, LiAsF₆, LiBF₄, LiSO₃CF₃, CH₃SO₃Li and CF₃SO₃Li.

In addition, a so-called solid electrolyte, gel electrolyte or fused salt electrolyte can be used for the nonaqueous electrolyte. Examples of solid electrolytes or gel electrolytes include polymer electrolytes and inorganic solid electrolytes. Examples of polymer electrolytes include sulfonated styrene-olefin copolymers, polymer electrolytes using polyethylene oxide and MgClO₄ and polymer electrolytes having a trimethylene oxide structure. The nonaqueous solvent used in polymer electrolytes is preferably at least one type selected from the group consisting of ethylene carbonate, diethyl carbonate, dimethyl carbonate, methyl ethyl carbonate, propylene carbonate, butylene carbonate, γ-butyrolactone and vinylene carbonate.

### (Separator)

A known separator can be used for the separator. Examples of separators include non-woven fabric, woven fabric, microporous film and combinations thereof, and more specifically, a porous polypropylene film or porous polyethylene film and the like can be used suitably. A heat-resistant layer containing ceramic particles and the like may be formed on the surface of the separator.

In addition, in the case of using a solid electrolyte or gel electrolyte for the aforementioned nonaqueous electrolyte, the nonaqueous electrolyte may also serve as a separator.

### (Outer Casing)

A laminated package, obtained by sandwiching a metal case or metal foil such as aluminum foil between a heat-resistant resin film such as polyethylene terephthalate or Nylon and a thermoadhesive resin such as polypropylene, is normally used for the outer casing. A laminated package is preferably used for the outer casing from the viewpoints of reduced battery size and weight.

In addition, in the case of producing an electric double-layer capacitor, the electric double-layer capacitor is normally produced by sealing a pair of electrodes and a separator inserted between the electrodes either directly or by wrapping around or laminating as necessary in an outer casing together with an electrolyte.

The same separator and outer casing as those used in a lithium secondary battery are used for the separator and outer casing of an electric double-layer capacitor.

A known nonaqueous solvent electrolytic solution or water-soluble electrolytic solution can be used for the electrolyte used in the electric double-layer capacitor, and in addition to the electrolytic solution, a solid polymer electrolyte, gel polymer electrolyte or ionic liquid can also be used.

Examples of water-soluble electrolytic solutions include aqueous sulfuric acid solution, aqueous sodium sulfate solution and aqueous sodium hydroxide solution.

Examples of nonaqueous solvent electrolytic solutions include those using a quaternary ammonium salt or quaternary phosphonium salt that are composed of a cation represented by the formula R¹R²R³R⁴N⁺ or R¹R²R³R⁴P⁺ (wherein, R¹, R², R³ and R⁴ respectively and independently represent an alkyl group or allyl group having 1 to 10 carbon atoms) and an anion of BF⁴⁻, PF⁶⁻ or ClO⁴⁻, as electrolyte, and use a carbonate-based nonaqueous solvent such as ethylene carbonate or propylene carbonate as solvent. Two or more types of each of the electrolyte and solvent can also be used in combination.

Although the above has provided an explanation of the present invention by using as an example of the case of producing a lithium secondary battery or electric double-layer capacitor for the electrochemical element, the present invention is not limited thereto. As was previously described, since the use of the current collector produced according to the present invention makes it possible to lower the internal resistance of an electrochemical element, the present invention can be applied to any electrochemical element that requires a decrease in the internal resistance thereof.

The electrochemical element of the present invention can be used in various fields. Examples thereof include electrical and electronic devices such as personal computers, tablet computers, laptop computers, cellular phones, radio equipments, electronic organizers, electronic dictionaries, personal digital assistants (PDA), electronic meters, electronic keys, electronic tags, power storage equipment, electric power tools, toys, digital cameras, digital video cameras, AV equipment or vacuum cleaners; transportation means such as electric vehicles, hybrid vehicles, electric motorcycles, hybrid motorcycles, motorized bicycles, power-assist bicycles, trains, aircraft or marine vessels; and power generation systems such as solar power generation systems, wind power generation systems, tidal power generation systems, geothermal power generation systems, temperature difference power generation systems or vibration power generation systems.

### [Examples]

The following provides a more detailed explanation of the present invention by indicating examples and comparative examples of the present invention using a lithium secondary battery as an example of an electrochemical element. Furthermore, the scope of the present invention is not limited by the present examples.

The properties of current collectors produced according to the method of producing a current collector for an electrochemical element in the present invention were measured with the methods indicated below.

### (Feedthrough Resistance Value)

Two sheets of a current collector were cut out to a size measuring 20 mm wide by 100 mm long. The two cut sheets were brought into contact so that the coated surfaces were facing each other. The contact area was adjusted to 20 mm × 20 mm followed by placing on a vinyl chloride plate. A load of 98 kPa (1 kg/cm²) was applied to the portion where the two current collectors were in contact to fix the contacting portions. An AC milliohm meter was connected to each end not contacted by the sheets of the current collector followed by measuring the feedthrough resistance value (direct current resistance) of the current collector.

### (Thickness of Coating Layer)

A portion provided with a coating layer formed on a metal foil and a portion not provided with a coating layer were each measured with a micrometer, and the thickness of the coating layer was determined by calculating the difference therebetween.

### (Production of Coating Liquids and Current Collectors)

### (Examples 1 to 10)

The raw materials were placed in a dissolver type stirrer according to the formulas shown in Table 1 followed by mixing for 10 minutes at a rotation rate of 300 rpm. Next, the mixtures were treated for 30 seconds at 20,000 rpm using a homogenizer (product name: PRO200, Ieda Trading Corp.) to obtain coating liquids for coating layer in which carbon particles and the like were uniformly dispersed in a dispersion medium. Furthermore, in Table 1, the sum of the amounts of the carbon particles (A), binder (B) and crosslinking agent (C) is 100 parts by weight.

Aluminum foil was prepared composed of alkaline-cleaned aluminum A1085 and having a thickness of 30 µm.

The aforementioned coating liquids for coating layer were applied to both sides of the aluminum foil by casting using an applicator. Subsequently, the coated aluminum foil was dried by heat-treating for 3 minutes at 180°C to obtain current collectors 1 to 10 provided with a coating layer. The properties of the resulting current collectors are shown in Table 2. Furthermore, the meanings of the abbreviations shown in Table 1 are as indicated below.
* NMP: N-methyl-2-pyrrolidone
* IPA: Isopropyl alcohol
* AB: Acetylene black
* GP: Graphite

### [Comparative Example 1]

The properties of a current collector were measured in the same manner as in the examples for only aluminum foil composed of alkaline-cleaned aluminum A1085 and having a thickness of 30 µm. The properties thereof are shown in Table 2.

**[Table 1]**

| | | Carbon fine particles (A) | | Binder (B) | | Crosslinking agent (C) | | Dispersion medium (parts by wt) | | Ratio of carbon fine particles (wt%) (A)/[(A)+(B)+(C)] × 100 |
|---|---|---|---|---|---|---|---|---|---|---|
| | | Type | Parts by wt | Type | Parts by wt | Type | Parts by wt | NMP | IPA | |
| | 1 | AB | 2.5 | Hydroxyethyl cellulose | 2.5 | Pyromellitic acid | 2.5 | 87.5 | 5 | 33.3 |
| | 2 | GP | 8 | Hydroxyethyl cellulose | 3 | Pyromellitic acid | 3 | 81 | 5 | 57.1 |
| Examples | 3 | AB | 5 | Hydroxypropyl cellulose | 2.5 | Pyromellitic acid | 2.5 | 85 | 5 | 50.0 |
| | 4 | GP | 15 | Hydroxypropyl cellulose | 3 | Pyromellitic acid | 3 | 74 | 5 | 71.4 |
| | 5 | AB | 10 | Hydroxyethyl starch | 2.5 | Pyromellitic acid | 2 | 80 | 5.5 | 69.0 |
| | 6 | GP | 8 | Hydroxyethyl starch | 2.5 | Trimellitic acid | 2.5 | 82 | 5 | 61.5 |
| | 7 | AB | 15 | Hydroxypropyl starch | 2.5 | Pyromellitic acid | 2 | 75 | 5.5 | 76.9 |
| | 8 | GP | 10 | Hydroxypropyl starch | 2.5 | Pyromellitic acid | 2 | 80 | 5.5 | 69.0 |
| | 9 | AB | 5 | Hydroxypropyl quar qum | 2 | Pyromellitic acid | 2 | 81 | 10 | 55.6 |
| | 10 | GP | 10 | Hydroxypropyl quar qum | 2 | Pyromellitic acid | 2 | 71 | 15 | 71.4 |

**[Table 2]**

| | | Coating layer thickness (µm) | Feedthrough resistance value (mΩ) |
|---|---|---|---|
| Current Collectors | 1 | 0.5 | 145 |
| | 2 | 1.5 | 93 |
| | 3 | 1.1 | 133 |
| | 4 | 4.3 | 101 |
| | 5 | 2.5 | 81 |
| | 6 | 1.4 | 87 |
| | 7 | 3.2 | 77 |
| | 8 | 2.1 | 85 |
| | 9 | 1.0 | 118 |
| | 10 | 2.0 | 83 |
| Comparative Example | 1 | 0 | 10000 |

### (Production and Evaluation of Lithium Ion Batteries)

### (Examples 11 to 20 and Comparative Example 2)

The current collectors obtained in Examples 1 to 10 and Comparative Example 1 were cut out to a size of 10 cm × 10 cm. 95 parts by weight of lithium cobalt oxide (trade name: CELLSEED C, Nippon Chemical Industrial Co., Ltd.), 2 parts by weight of acetylene black (trade name: Denka Black (powder), Denki Kagaku Kogyo K.K.), 3 parts by weight of polyvinylidene fluoride (trade name: KF Polymer #1120, Kureha Corp.) and 95 parts by weight of N-methyl-2-pyrrolidone (industrial grade) were mixed to obtain a slurry. This slurry was applied to both sides of the cut out current collectors. Subsequently, the coated current collectors were dried and pressed to form positive electrode active material layers having a thickness of 50 µm per side for use as positive electrodes.

On the other hand, 94 parts by weight of synthetic graphite (trade name: SCMG-AR, Showa Denko K.K.), 1 part by weight of acetylene black (trade name: Denka Black (powder), Denki Kagaku Kogyo K.K.), 5 parts by weight of polyvinylidene fluoride (trade name: KF Polymer #9130,Kureha Corp.) and 94 parts by weight of N-methyl-2-pyrrolidone (industrial grade) were mixed to obtain a slurry. This slurry was applied to both sides of electrolytic copper foil having a thickness of 10 µm followed by drying and pressing to form negative electrode active materials having a thickness of 55 µm per side for use as negative electrodes.

A separator (trade name: Celgard 2500, Polypore International, Inc.) was incorporated between the positive electrodes and the negative electrode followed by alternately laminating the required number of sheets for a design capacity of 1 Ah. An aluminum tab electrode was attached to the positive electrode while a nickel tab electrode was attached to the negative electrode with an ultrasonic welding machine. These were placed in a pouch-shaped aluminum laminated package and moisture was removed with a vacuum dryer at 60°C. Subsequently, an organic electrolytic solution in the form of LiPF₆ solution (Kishida Chemical Co., Ltd.) was injected and retained for 24 hours in a vacuum atmosphere for impregnation. The openings of the aluminum laminated packages were then sealed with a vacuum sealer to produce lithium secondary batteries.

The internal resistance of the resulting lithium secondary batteries was measured at a measuring frequency of 1 kHz according to the AC impedance method using an impedance meter.

The cycling characteristics of the resulting lithium secondary batteries were evaluated according to the procedure indicated below. By sequentially changing the current rate at 0.2C, 2C and 20C using a charge/discharge device (Toyo System Co., Ltd.), the capacity after 200 cycles was measured in each case. The capacity retention rates at 2C and 20C were calculated using the capacity at 0.2C as a reference. Here, measurements were carried out using a cutoff voltage of 2.7 V to 4.2 V and SOC of 100%. The results are shown in Table 3.

**[Table 3]**

| | | | Capacity retention rate | | |
|---|---|---|---|---|---|
| | | | Internal resistance (Ω) | 2C (%) | 20C (%) |
| Examples | 11 | Current collector 1 | 19 | 92 | 59 |
| | 12 | Current collector 2 | 12 | 94 | 63 |
| | 13 | Current collector 3 | 17 | 93 | 60 |
| | 14 | Current collector 4 | 13 | 95 | 62 |
| | 15 | Current collector 5 | 15 | 93 | 60 |
| | 16 | Current collector 6 | 12 | 94 | 64 |
| | 17 | Current collector 7 | 12 | 94 | 62 |
| | 18 | Current collector 8 | 13 | 93 | 63 |
| | 19 | Current collector 9 | 16 | 93 | 61 |
| | 20 | Current collector 10 | 12 | 95 | 63 |
| Comp. Ex. | 2 | Current collector of Comparative Example 1 | 51 | 90 | 20 |

As shown in Table 3, lithium secondary batteries produced using the current collector of the present invention were proved to have low internal resistance and superior cycling characteristics regardless of current rate.

## Claims

1. A method of producing a current collector for an electrochemical element, comprising:
a step for coating a coating liquid onto a metal foil,
the coating liquid comprising:
a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
an organic acid having valence of two or more,
carbon particles, and
a dispersion medium consisting of an organic solvent; and
a step for removing the organic solvent and forming a coating layer on the metal foil,
wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof,
**characterised in that** the organic solvent comprises a protic and an aprotic organic solvent.

2. The method of producing a current collector for an electrochemical element according to claim 1, wherein the carbon particles are at least one selected from the group consisting of carbon black, graphite, vapor grown carbon fibers, carbon nanotubes, carbon nanofibers and graphene.

3. A method of producing an electrode for an electrochemical element, comprising:
a step for coating a coating liquid onto a metal foil,
the coating liquid comprising:
a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
an organic acid having valence of two or more,
carbon particles, and
a dispersion medium consisting of an organic solvent;
a step for removing the organic solvent and forming a coating layer on the metal foil; and,
a step for forming a film containing an electrode active material on the coating layer,
wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof,
**characterised in that** the organic solvent comprises a protic and an aprotic organic solvent.

4. The method according to any one of claims 1 to 3, wherein the aprotic polar organic solvent has a boiling point at normal pressure of 50-300°C, and the protic polar organic solvent has a boiling point at normal pressure of 100°C or less.

5. Use of a coating liquid for fabricating a current collector for an electrochemical element, the coating liquid comprising:
a binder which is at least one substance selected from the group consisting of methyl cellulose, ethyl cellulose, hydroxyethyl cellulose, hydroxypropyl cellulose, hydroxyethyl methyl cellulose, hydroxyethyl ethyl cellulose, hydroxypropyl methyl cellulose, hydroxyethyl starch, hydroxypropyl starch, dextrin, pullulan, dextran, guar gum and hydroxypropyl guar gum,
an organic acid having valence of two or more,
carbon particles, and
a dispersion medium consisting of an organic solvent, and
wherein the organic acid is selected from the group consisting of phthalic acid, isophthalic acid, terephthalic acid, trimellitic acid, pyromellitic acid, biphenyl tetracarboxylic acid, benzophenone tetracarboxylic acid, succinic acid, maleic acid, tartaric acid, malic acid, glutaric acid, itaconic acid, adipic acid, citric acid, 1,2,3,4-butane tetracarboxylic acid, 2-phosphonobutane-1,2,4-tricarboxylic acid, and anhydrides thereof,
**characterised in that** the organic solvent comprises a protic and an aprotic organic solvent.

6. The use of claim 5, wherein the aprotic polar organic solvent has a boiling point at normal pressure of 50-300°C, and the protic polar organic solvent has a boiling point at normal pressure of 100°C or less.

## Patentansprüche

1. Verfahren zur Herstellung eines Stromabnehmers für ein elektrochemisches Element, umfassend:
einen Schritt zum Auftragen einer Beschichtungsflüssigkeit auf eine Metallfolie,
wobei die Beschichtungsflüssigkeit umfasst:
ein Bindemittel, das mindestens eine Substanz ist, die aus der aus Methylcellulose, Ethylcellulose, Hydroxyethylcellulose, Hydroxypropylcellulose, Hydroxyethylmethylcellulose, Hydroxyethylethylcellulose, Hydroxypropylmethylcellulose, Hydroxyethylstärke, Hydroxypropylstärke, Dextrin, Pullulan, Dextran, Guarkernmehl und Hydroxypropylguarkernmehl bestehenden Gruppe ausgewählt ist,
eine organische Säure mit einer Wertigkeit von zwei oder mehr,
Kohlenstoffpartikeln und
ein Dispersionsmedium, bestehend aus einem organischen Lösungsmittel; und
einen Schritt zum Entfernen des organischen Lösungsmittels und Bilden einer Beschichtungsschicht auf der Metallfolie,
wobei die organische Säure aus der aus Phthalsäure, Isophthalsäure, Terephthalsäure, Trimellitsäure, Pyromellitsäure, Biphenyltetracarbonsäure, Benzophenontetracarbonsäure, Bernsteinsäure, Maleinsäure, Weinsäure, Äpfelsäure, Glutarsäure, Itaconsäure, Adipinsäure, Zitronensäure, 1,2,3,4-Butan-Tetracarbonsäure, 2-Phosphonobutan-1,2,4-Tricarbonsäure und deren Anhydride bestehenden Gruppe ausgewählt ist,
**dadurch gekennzeichnet, dass** das organische Lösungsmittel ein protisches und ein aprotisches Lösungsmittel enthält.

2. Verfahren zur Herstellung eines Stromabnehmers für ein elektrochemisches Element nach Anspruch 1, worin die Kohlenstoffteilchen mindestens ein Mitglied der Gruppe ist, die aus Ruß, Graphit, dampfgewachsenen Kohlenstoffasern, Kohlenstoff-Nanoröhrchen, Kohlenstoff-Nanofasern und Graphen besteht.

3. Verfahren zur Herstellung einer Elektrode für ein elektrochemisches Element, umfassend:
einen Schritt zum Auftragen einer Beschichtungsflüssigkeit auf eine Metallfolie,
wobei die Beschichtungsflüssigkeit umfasst:
ein Bindemittel, das mindestens eine Substanz ist, die aus der Gruppe ausgewählt ist, die aus Methylcellulose, Ethylcellulose, Hydroxyethylcellulose, Hydroxypropylcellulose, Hydroxyethylmethylcellulose, Hydroxyethylethylcellulose, Hydroxypropylmethylcellulose, Hydroxyethylstärke, Hydroxypropylstärke, Dextrin, Pullulan, Dextran, Guarkernmehl und Hydroxypropylguarkernmehl besteht,
eine organische Säure mit einer Wertigkeit von zwei oder mehr,
Kohlenstoffpartikeln und
ein Dispersionsmedium, bestehend aus einem organischen Lösungsmittel;
einen Schritt zum Entfernen des organischen Lösungsmittels und Bilden einer Beschichtungsschicht auf der Metallfolie; und,
einen Schritt zum Bilden eines Films, der ein elektrodenaktives Material auf der Beschichtungsschicht enthält,
wobei die organische Säure ausgewählt ist aus der Gruppe bestehend aus Phthalsäure, Isophthalsäure, Terephthalsäure, Trimellitsäure, Pyromellitsäure, Biphenyltetracarbonsäure, Benzophenontetracarbonsäure, Bernsteinsäure, Maleinsäure, Weinsäure, Äpfelsäure, Glutarsäure, Itaconsäure, Adipinsäure, Zitronensäure, 1,2,3,4-Butan-Tetracarbonsäure, 2-Phosphonobutan-1,2,4-Tricarbonsäure und deren Anhydride,
**dadurch gekennzeichnet, dass** das organische Lösungsmittel ein protisches und ein aprotisches organisches Lösungsmittel enthält...

4. Verfahren nach einem der Ansprüche 1 bis 3, worin das aprotische polare organische Lösungsmittel einen Siedepunkt bei Normaldruck von 50-300°C und das protische polare organische Lösungsmittel einen Siedepunkt bei Normaldruck von 100°C oder weniger aufweist.

5. Verwendung einer Beschichtungsflüssigkeit zur Herstellung eines Stromabnehmers für ein elektrochemisches Element, wobei die Beschichtungsflüssigkeit umfasst:
ein Bindemittel, das mindestens eine Substanz ist, die aus der Gruppe ausgewählt ist, die aus Methylcellulose, Ethylcellulose, Hydroxyethylcellulose, Hydroxypropylcellulose, Hydroxyethylmethylcellulose, Hydroxyethylethylcellulose, Hydroxypropylmethylcellulose, Hydroxyethylstärke, Hydroxypropylstärke, Dextrin, Pullulan, Dextran, Guarkernmehl und Hydroxypropylguarkernmehl besteht,
eine organische Säure mit einer Wertigkeit von zwei oder mehr,
Kohlenstoffpartikeln und
ein Dispersionsmedium, bestehend aus einem organischen Lösungsmittel, und
wobei die organische Säure ausgewählt ist aus der Gruppe bestehend aus Phthalsäure, Isophthalsäure, Terephthalsäure, Trimellitsäure, Pyromellitsäure, Biphenyltetracarbonsäure, Benzophenontetracarbonsäure, Bernsteinsäure, Maleinsäure, Weinsäure, Äpfelsäure, Glutarsäure, Itaconsäure, Adipinsäure, Zitronensäure, 1,2,3,4-Butan-Tetracarbonsäure, 2-Phosphonobutan-1,2,4-Tricarbonsäure und deren Anhydride,
**dadurch gekennzeichnet, dass** das organische Lösungsmittel ein protisches und ein aprotisches organisches Lösungsmittel enthält.

6. Verwendung von Anspruch 5, worin das aprotische polare organische Lösungsmittel einen Siedepunkt bei Normaldruck von 50-300°C und das protische polare organische Lösungsmittel einen Siedepunkt bei Normaldruck von 100°C oder weniger aufweist.

## Revendications

1. Procédé de production d'un collecteur de courant pour un élément électrochimique, comprenant:
une étape de dépôt d'un liquide de recouvrement sur une feuille de métal,
le liquide de recouvrement comprenant:
un liant qui est au moins une substance sélectionnée dans le groupe constitué de cellulose méthylique, de cellulose éthylique, de cellulose hydroxyéthylique, de cellulose hydroxypropylique, de cellulose hydroxyéthylméthylique, de cellulose hydroxyéthyléthylique, de cellulose hydroxypropylméthylique, d'amidon hydroxyéthylique, d'amidon hydroxypropylique, de dextrine, de pullulane, de dextrane, de gomme de guar et de gomme de guar hydroxypropylique,
un acide organique divalent ou de valence plus élevée,
des particules de carbone, et
un agent de dispersion consistant en un solvant organique; et
une étape pour enlever le solvant organique et former une couche de recouvrement sur la feuille de métal,
dans lequel l'acide organique est sélectionné dans le groupe comprenant l'acide phtalique, l'acide isophtalique, l'acide téréphtalique, l'acide triméllitique, l'acide pyroméllitique, l'acide biphényl tétracarboxylique, l'acide benzophénone tétracarboxylique, l'acide succinique, l'acide maléique, l'acide tartrique, l'acide malique, l'acide glutarique, l'acide itaconique, l'acide adipique, l'acide citrique, l'acide 1,2,3,4-butane tétracarboxylique, l'acide 2-phosphonobutane-1,2,4-tricarboxylique, ainsi que des anhydrides de ceux-ci, **caractérisé en ce que** le solvant organique comprend un solvant organique protique et un solvant organique aprotique.

2. Procédé de production d'un collecteur de courant pour un élément électrochimique selon la revendication 1, dans lequel les particules de carbone sont au moins des particules sélectionnées dans le groupe constitué de noir de carbone, de graphite, de fibres de carbone cultivées en phase vapeur, de nanotubes de carbone, de nanofibres de carbone et de graphène.

3. Procédé de production d'une électrode pour un élément électrochimique, comprenant:
une étape de dépôt d'un liquide de recouvrement sur une feuille de métal,
le liquide de recouvrement comprenant:
un liant qui est au moins une substance sélectionnée dans le groupe constitué de cellulose méthylique, de cellulose éthylique, de cellulose hydroxyéthylique, de cellulose hydroxypropylique, de cellulose hydroxyéthylméthylique, de cellulose hydroxyéthyléthylique, de cellulose hydroxypropylméthylique, d'amidon hydroxyéthylique, d'amidon hydroxypropylique, de dextrine, de pullulane, de dextrane, de gomme de guar et de gomme de guar hydroxypropylique,
un acide organique divalent ou de valence plus élevée,
des particules de carbone, et
un agent de dispersion consistant en un solvant organique;
une étape pour enlever le solvant organique et former une couche de recouvrement sur la feuille de métal; et
une étape pour former un film contenant un matériau d'électrode actif sur la couche de recouvrement,
dans lequel l'acide organique est sélectionné dans le groupe comprenant l'acide phtalique, l'acide isophtalique, l'acide téréphtalique, l'acide triméllitique, l'acide pyroméllitique, l'acide biphényl tétracarboxylique, l'acide benzophénone tétracarboxylique, l'acide succinique, l'acide maléique, l'acide tartrique, l'acide malique, l'acide glutarique, l'acide itaconique, l'acide adipique, l'acide citrique, l'acide 1,2,3,4-butane tétracarboxylique, l'acide 2-phosphonobutane-1,2,4-tricarboxylique, ainsi que des anhydrides de ceux-ci, **caractérisé en ce que** le solvant organique comprend un solvant organique protique et un solvant organique aprotique.

4. Procédé selon l'une quelconque des revendications 1 à 3, dans lequel le solvant organique polaire aprotique présente un point d'ébullition à une pression normale compris entre 50°C et 300°C, et le solvant organique polaire protique présente un point d'ébullition à une pression normale de 100°C, ou moins.

5. Utilisation d'un liquide de recouvrement pour fabriquer un collecteur de courant pour un élément électrochimique, le liquide de recouvrement comprenant:
un liant qui est au moins une substance sélectionnée dans le groupe constitué de cellulose méthylique, de cellulose éthylique, de cellulose hydroxyéthylique, de cellulose hydroxypropylique, de cellulose hydroxyéthylméthylique, de cellulose hydroxyéthyléthylique de cellulose hydroxypropylméthylique, d'amidon hydroxyéthylique, d'amidon hydroxypropylique, de dextrine, de pullulane, de dextrane, de gomme de guar et de gomme de guar hydroxypropylique,
un acide organique divalent ou de valence plus élevée,
des particules de carbone, et
un agent de dispersion consistant en un solvant organique, et
dans lequel l'acide organique est sélectionné dans le groupe comprenant l'acide phtalique, l'acide isophtalique, l'acide téréphtalique, l'acide triméllitique, l'acide pyroméllitique, l'acide biphényl tétracarboxylique, l'acide benzophénone tétracarboxylique, l'acide succinique, l'acide maléique, l'acide tartrique, l'acide malique, l'acide glutarique, l'acide itaconique, l'acide adipique, l'acide citrique, l'acide 1,2,3,4-butane tétracarboxylique, l'acide 2-phosphonobutane-1,2,4-tricarboxylique, ainsi que des anhydrides de ceux-ci, **caractérisé en ce que** le solvant organique comprend un solvant organique protique et un solvant organique aprotique.

6. Utilisation selon la revendication 5, dans laquelle le solvant organique polaire aprotique présente un point d'ébullition à une pression normale compris entre 50°C et 300°C, et le solvant organique polaire protique présente un point d'ébullition à une pression normale de 100°C, ou moins.
